# DEMANDE DE BREVET EUROPEEN

(11) **EP 1 153 563 A1**
(43) Date de publication de la demande: **14.11.2001**
(21) Numéro de dépôt: 01420105.7
(22) Date de dépôt: 10.05.2001
(51) Int. Cl.: A47J 43/046, A47J 36/10

(54) **Appareil électroménager de préparation culinaire comportant un dispositif de vérrouillage à machoires du couvercle sur le récipient**

(30) Priorité: 12.05.2000 FR 0006101
(71) Demandeur: SEB S.A., 69130 Ecully (FR)
(72) Inventeur: Smit, Robert, 65290 Louey (FR); Rouyer, Philippe, 65380 Ossun (FR)

(57) **Abrégé**

- L'invention concerne un appareil électroménager de préparation culinaire, comportant un boîtier formant un socle de réception d'un récipient (5) fermé par un couvercle (6), un dispositif de verrouillage du couvercle (6) sur le récipient (5) comprenant au moins deux mâchoires de verrouillage (7) diamétralement opposées par rapport au bord supérieur du récipient (5) et montées chacune en rotation sur un axe (20), chaque mâchoire (7) présentant une conformation (30) prévue pour coopérer avec un rebord périphérique (10) du couvercle (6),
- Conformément à l'invention les mâchoires (7) sont disposées chacune dans un bras (4) s'étendant à distance du socle, chaque conformation (30) présentant une surface de contact supérieure (24), prévue pour coopérer avec une zone d'appui supérieure (12) du rebord (10) du couvercle (6) en correspondance, ainsi qu'une surface de contact latérale (31) prévue pour coopérer avec une zone d'appui intérieure (15) du rebord (10) du couvercle (6) en correspondance.

## Description

La présente invention concerne le domaine technique général des appareils électroménagers de préparation culinaire, ou robots ménagers.

Il est connu du document WO 99/17647 un appareil électroménager de préparation culinaire comportant un boîtier moteur, un récipient de travail et un couvercle, le couvercle étant verrouillé sur le récipient au moyen de mâchoires montées dans le boîtier. Le récipient de travail est disposé sur une partie du boîtier formant un socle. Selon un mode de réalisation, les mâchoires sont montées mobiles en rotation dans le boîtier, et peuvent occuper une première position dans laquelle le couvercle peut être retiré du récipient ainsi qu'une deuxième position dans laquelle le couvercle est verrouillé sur le récipient.

Afin de faciliter la préhension du récipient de travail, ainsi que l'observation du contenu du récipient de travail, le boîtier peut comprendre un corps disposé latéralement par rapport au récipient et au couvercle, le corps étant prolongé d'une part par le socle inférieur sous le récipient et d'autre part par deux bras supérieurs s'étendant à distance du socle, les mâchoires étant alors disposées dans chacun des bras. Comme les bras entourent partiellement la périphérie du couvercle et laissent libre les parois latérales du récipient, la préhension du récipient de travail est aisée, ainsi que l'observation du contenu du récipient de travail, lorsque celui-ci est réalisé en matériau transparent.

Des essais ont toutefois montré que la flexibilité des bras était susceptible de provoquer un maintien insuffisant du couvercle sur le récipient, lorsque des efforts importants sont exercés sur le couvercle ou sur le récipient.

L'objet de la présente invention est de remédier à l'inconvénient précité et de garantir le verrouillage du couvercle sur le récipient même lorsqu'un effort important est exercé sur le couvercle ou sur les bras du récipient, tout en conservant une préhension aisée du récipient, un encombrement réduit de l'appareil ainsi qu'une grande simplicité d'utilisation.

Ces objets sont atteints avec un appareil électroménager de préparation culinaire, comportant un boîtier formant un socle de réception d'un récipient fermé par un couvercle, un dispositif de verrouillage du couvercle sur le récipient comprenant au moins deux mâchoires de verrouillage montées chacune en rotation sur un axe dans le boîtier de manière diamétralement opposée par rapport au bord supérieur du récipient, chaque mâchoire comportant une face antérieure disposée en regard du récipient et présentant une conformation prévue pour coopérer avec un rebord périphérique du couvercle, du fait que les mâchoires sont disposées chacune dans un bras s'étendant à distance du socle, chaque conformation présentant une surface de contact supérieure, prévue pour coopérer avec une zone d'appui supérieure du rebord du couvercle en correspondance, ainsi qu'une surface de contact latérale prévue pour coopérer avec une zone d'appui intérieure du rebord du couvercle en correspondance. Cette disposition permet de libérer l'espace sur une grande partie de la périphérie du récipient de travail, le boîtier formant alors un corps s'étendant latéralement par rapport au récipient, le récipient étant disposé sur le socle issu du corps, et les mâchoires de verrouillage étant disposées chacune dans l'un des bras. Les parois supérieures des mâchoires permettent de limiter le mouvement vertical du couvercle. Les parois latérales des mâchoires permettent de limiter les mouvements latéraux des bras par rapport au couvercle. Par zone d'appui intérieure du rebord du couvercle on entend une zone verticale ou inclinée orientée vers l'intérieur du récipient, et non vers l'extérieur du récipient. Ainsi le rebord du couvercle ne peut s'échapper des mâchoires du fait d'un déplacement latéral du couvercle ou des bras. L'appareil est donc d'une utilisation sûre sans pour autant nécessiter des bras très rigides.

Avantageusement l'axe de rotation de chaque mâchoire est horizontal. Cette disposition permet d'augmenter la longueur d'appui des mâchoires sur le rebord du couvercle tout en limitant l'encombrement des bras.

Avantageusement les zones d'appui supérieures du couvercle et/ou les surfaces de contact supérieures des mâchoires en position de verrouillage sont horizontales. Cette disposition permet de conserver la même hauteur pour le couvercle, et donc la même qualité d'étanchéité, en cas de petits mouvements latéraux des bras portant les mâchoires.

Avantageusement les zones d'appui intérieures du couvercle et/ou les surfaces de contact latérales des mâchoires en position de verrouillage sont verticales. Cette disposition permet de conserver la même hauteur pour le couvercle, et donc la même qualité d'étanchéité, en cas de petits mouvements latéraux des bras portant les mâchoires.

Avantageusement les conformations comportent une surface de contact inférieure, ou une paroi de fond, prévue pour coopérer avec un bord inférieur et/ou une paroi latérale du rebord du couvercle. Cette disposition permet d'obtenir une rotation des mâchoires lors de la mise en place du couvercle sur le récipient.

Avantageusement alors, les surfaces de contact supérieures et les surfaces de contact inférieures sont disposées en regard l'une de l'autre. Les conformation sont alors concaves. Cette disposition permet de faciliter l'introduction du couvercle, et de limiter l'encombrement des bras.

Avantageusement encore les surfaces de contact supérieures en position de verrouillage sont disposées au dessus du plan horizontal passant par l'axe de rotation de la mâchoire correspondante, et les surfaces de contact inférieures en position de verrouillage sont disposées en dessous dudit plan. Ces dispositions permettent de faciliter la rotation des mâchoires par simple mise en place du couvercle sur le récipient.

Avantageusement le rebord comporte des parois latérales prévues chacune pour coopérer avec une paroi de fond reliant la surface de contact inférieure et la surface de contact supérieure de chaque mâchoire. Ces dispositions permettent de limiter le jeu latéral des mâchoires par rapport au rebord du couvercle, tout en améliorant la compacité et la rigidité des mâchoires.

Avantageusement les surfaces de contact latérales sont formées par des ressauts ménagés sur les surfaces de contact inférieures. Comme les ressauts sont disposés en partie inférieure des mâchoires, le verrouillage du couvercle par basculement des mâchoires lors de l'introduction du couvercle est facilité. Le couvercle peut être verrouillé par la paroi supérieure des mâchoires sans jeu important.

L'invention sera mieux comprise à l'étude d'exemples de réalisation, pris à titre nullement limitatif, et illustrés dans les figures annexées dans lesquelles :
- la figure 1 est une vue de côté d'un appareil électroménager de préparation culinaire comportant un dispositif de verrouillage selon l'invention selon un premier exemple de réalisation,
- la figure 2 est une vue partielle en coupe de face du récipient, du couvercle et d'un bras comportant une mâchoire de verrouillage en position ouverte de l'appareil montré à la figure 1,
- la figure 3 est une vue partielle en coupe de face du récipient, du couvercle et d'un bras comportant une mâchoire de verrouillage en position fermée de l'appareil montré à la figure 1,
- la figure 4 est une vue en perspective du boîtier de l'appareil selon le premier exemple de réalisation, montrant les bras et l'une des mâchoires de verrouillage,
- la figure 5 est une vue détaillée de la mâchoire de verrouillage montrée à la figure 4,
- la figure 6 est une vue partielle en coupe de face du récipient, du couvercle et d'un bras comportant une mâchoire de verrouillage en position ouverte d'un appareil selon un second mode de réalisation.
- la figure 7 est une vue partielle en coupe de face du récipient, du couvercle et d'un bras comportant une mâchoire de verrouillage en position fermée de l'appareil selon le second mode de réalisation.

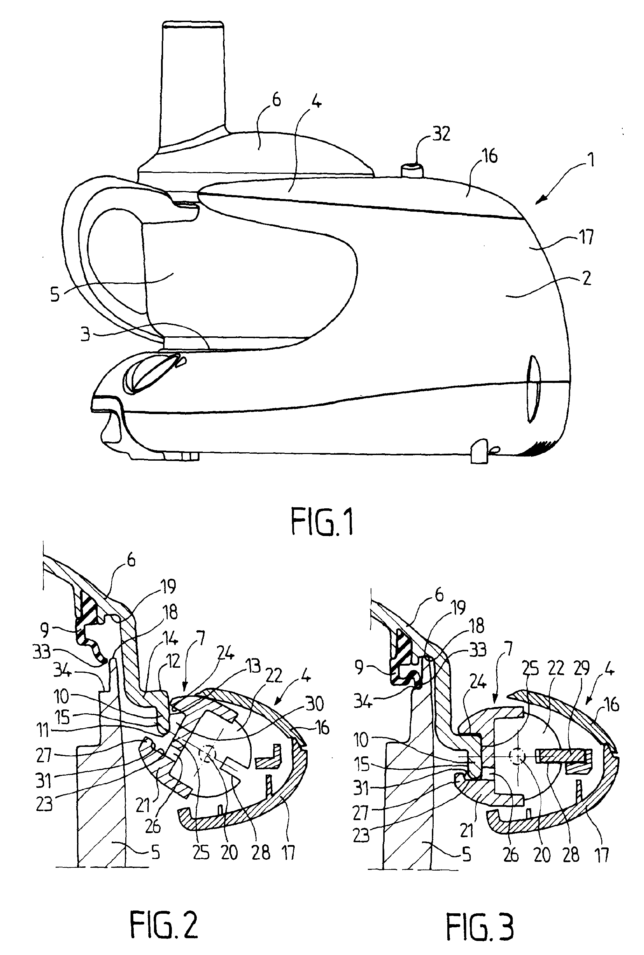

La figure 1 montre un appareil électroménager de préparation culinaire comportant un boîtier 1, un récipient de travail 5, dans lequel peuvent être montés le ou les outils de travail de l'appareil, non représentés aux figures, et un couvercle 6. Le boîtier 1 forme un corps 2 disposé latéralement par rapport au récipient 5, prolongé d'une part par un socle 3 sur lequel repose le récipient 5, et d'autre part par deux bras 4 s'étendant à distance du socle 3. Les bras 4 sont sensiblement horizontaux. Le récipient 5 est cylindrique et est avantageusement réalisé en un matériau transparent tel que l'ABS.

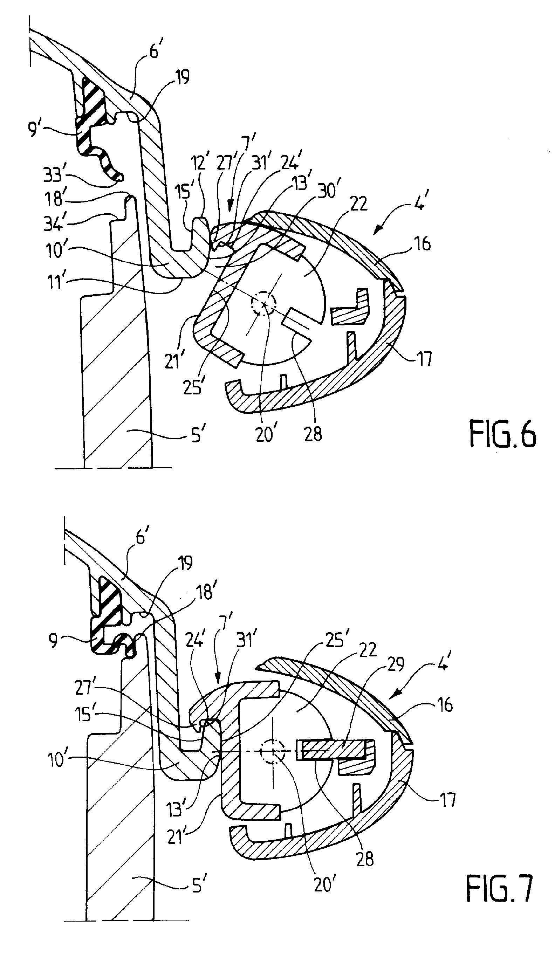

Tel que mieux visible aux figures 2 et 3, chaque bras 4 comporte une mâchoire de verrouillage 7. Chaque mâchoire 7 est montée mobile en rotation dans l'un des bras 4 autour d'un axe 20, également visible à la figure 5, entre une position d'attente, représentée à la figure 2, et une position de verrouillage, représentée à la figure 3. Tel que représenté aux figures, l'axe 20 est horizontal. Un moyen de rappel vers la position d'attente, non représenté aux figures, est avantageusement prévu.

Les mâchoires 7 sont prévues pour venir en prise avec un rebord périphérique 10 du couvercle 6 lorsque le couvercle 6 ferme le récipient 5 disposé sur le socle 3, tel que représenté aux figures 1 et 3. Le rebord périphérique 10 comporte un bord inférieur 11 arrondi, relié par une paroi latérale 13 verticale à une zone d'appui supérieure 12 horizontale prévue pour coopérer avec les mâchoires 7. La zone d'appui supérieure 12 est formée par la face supérieure d'un montant radial 14 du couvercle 6.

Le récipient 5 comporte un bord supérieur 18 prévu pour coopérer avec une rainure 19 ménagée sur la face interne du couvercle 6. Le rebord 10 du couvercle 6 entoure la rainure 19. Un joint 9 est prévu pour assurer l'étanchéité entre le couvercle 6 et le récipient 5. Le joint 9 est monté sur la face interne du couvercle 6 et comporte une extrémité 33 prévue pour venir en appui sur une collerette 34. Le bord supérieur 18 du récipient 5 entoure la collerette 34. A titre de variante, le joint 9 pourrait être monté sur le couvercle 6.

Les mâchoires 7 des deux bras 4 sont symétriques. Chaque mâchoire 7 présente une face postérieure 22 disposée à l'intérieur de l'un des bras, et une face antérieure 21 disposée en regard du récipient 5 dans une ouverture ménagée dans ledit bras. La face antérieure 21 présente une conformation 30 concave, ou en d'autres termes, une découpe, prévue pour coopérer avec le rebord 10 du couvercle 6.

Cette conformation 30 comprend une surface de contact inférieure 23 prévue pour coopérer avec le bord inférieur 11 du rebord 10 du couvercle 6 lorsque ledit couvercle est mis en place sur le récipient 5, et une surface de contact supérieure 24, prévue pour coopérer avec la zone d'appui supérieure 12 ménagée sur le dessus du rebord 10 du couvercle 6, lorsque ledit couvercle est verrouillé sur le récipient 5.

La surface de contact inférieure 23 et la surface de contact supérieure 24 sont parallèles, sont disposées en regard l'une de l'autre de part et d'autre du plan leur étant parallèle et passant par l'axe de rotation 20, et sont reliées par une paroi de fond 25. Tel que montré à la figure 3, la paroi de fond 25 en position de verrouillage est perpendiculaire au plan horizontal passant par l'axe de rotation 20, la surface de contact supérieure 24 en position de verrouillage est disposée au dessus dudit plan, et la surface de contact inférieure 23 en position de verrouillage est disposée en dessous dudit plan.

La hauteur du rebord 10 entre la zone d'appui supérieure 12 et le bord inférieur 11 est légèrement inférieure à la distance entre les surfaces de contact inférieure 23 et supérieure 24, afin de présenter un léger jeu permettant de faciliter la rotation de la mâchoire 7.

On remarquera qu'une nervure 27 borde la surface de contact inférieure 23 du côté de l'extrémité libre de la face antérieure 21, c'est à dire du coté du récipient 5. Le côté intérieur de la nervure 27 forme un ressaut constituant une surface de contact latérale 31 verticale prévue pour coopérer avec une zone d'appui intérieure 15 également verticale, ménagée sur la face intérieure du bord inférieur 11 du rebord 10 du couvercle 6 lorsque ledit couvercle est verrouillé sur le récipient. La hauteur de la surface de contact latérale 31 est suffisante pour bloquer le bord inférieur 11 du rebord 10 lors d'un mouvement de translation ou de torsion du bras 4. Une ouverture 26 peut être prévue dans la paroi de fond 25 à des fins de démoulage, tel que mieux visible à la figure 5.

La face postérieure 22 comporte une encoche 28 prévue pour recevoir une barre de verrouillage 29 lorsque la mâchoire 7 occupe une position de verrouillage, tel que représenté à la figure 3. La barre de verrouillage 29 est repoussée par des moyens de rappels (non représentés aux figures) activés lors de la rotation des mâchoires en position de verrouillage, et peut être retirée de l'encoche 28 à des fins de déverrouillage au moyen d'un bouton de déverrouillage 32 disposé sur le boîtier 1. Le dispositif de commande du bouton de déverrouillage 32 correspond au dispositif de déverrouillage à mâchoires rotatives de la demande WO 99/17647 ou de la demande WO 99/17646, dont les descriptions sont incorporées à la présente demande par référence.

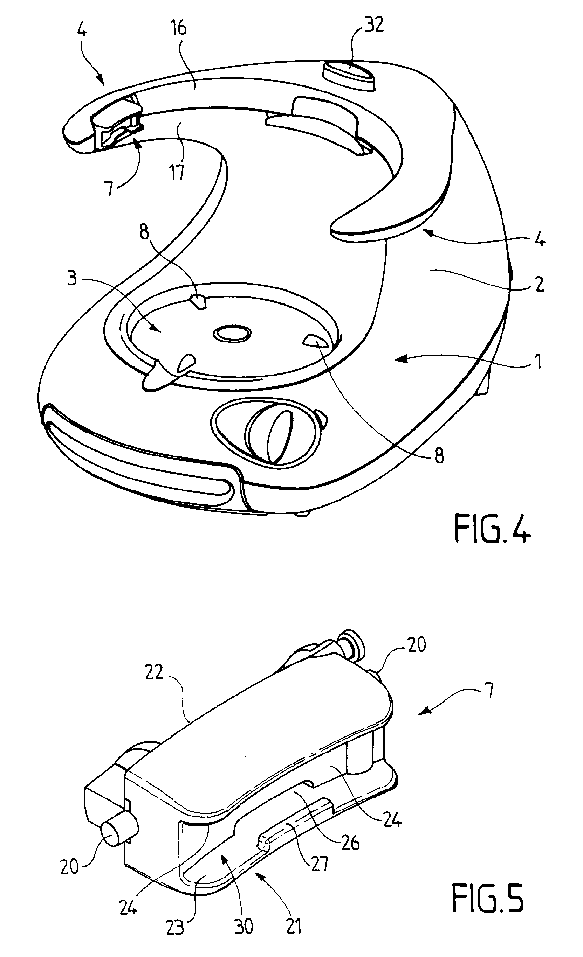

On remarquera sur la figure 4 que le socle 3 comporte des butées 8, prévues pour bloquer en rotation le récipient 5 (non représenté à la figure 4). Les mâchoires 4 sont disposées de manière diamétralement opposée par rapport au récipient 5. Les bras 4 comportent une pièce supérieure 16, formant également la partie supérieure du corps 2, et une pièce inférieure 17, formant également la majeure partie du corps 2 ainsi qu'une partie du socle 3. De ce fait la pièce inférieure 17 forme la majeure partie du boîtier 1 et la pièce supérieure 16 forme la partie supérieure du boîtier 1. Les pièces supérieure 16 et inférieure 17 sont également visibles aux figures 2 et 3. Avantageusement, le couvercle 6 comporte des moyens de blocage en rotation par rapport au récipient 5, non montrés aux figures.

Ainsi l'appareil comporte un dispositif de verrouillage du couvercle 6 sur le récipient 5, comprenant deux mâchoires de verrouillage 7 montées chacune en rotation sur l'axe 20 dans l'un des bras 4 du boîtier 1 de manière diamétralement opposée par rapport au bord supérieur 18 du récipient 5.

Le fonctionnement de la présente invention est le suivant.

Lorsque le couvercle 6 n'est pas en place sur le récipient 5, les mâchoires 7 occupent la position d'attente montrée à la figure 2, dans laquelle les surfaces de contact supérieures 24 sont rapprochées des pièces supérieures 16 des bras 4, donc rentrées partiellement dans les bras 4, et les surfaces de contact inférieures 23 sont éloignées des pièces inférieures 17 des bras 4, donc sorties des bras 4.

Lors de la mise en place du couvercle 6 sur le récipient 5, les bords inférieurs 11 viennent en contact avec les parois surfaces de contact 23, ce qui provoque la rotation des mâchoires 7 autour des axes 20. Les surfaces de contact supérieures 24 viennent alors en appui sur les zones d'appui supérieures 12. Les mâchoires 7 sont alors bloquées en position de verrouillage par les barres de verrouillage 29 s'engageant dans les encoches 28, tel que montré à la figure 3. Le joint 9 tend à soulever le couvercle 6. De ce fait les bords inférieurs 11 ne sont plus en contact avec les surfaces de contact inférieures 23.

Les surfaces de contact latérales 31 limitent le mouvement des mâchoires 7 vers l'extérieur du récipient 5, donc limitent l'éloignement des bras 4 du récipient 5, et les parois de fond 25 limitent le mouvement des mâchoires 7 vers l'intérieur du récipient 5, donc limitent le rapprochement des bras 4 du récipient. Il n'est ainsi pas nécessaire de prévoir des bras 4 extrêmement rigides pour éviter que les mâchoires 7 ne laissent échapper le rebord 10 du couvercle 6. Lorsque les mâchoires 7 sont en position de verrouillage, tel que montré à la figure 3, le couvercle 6 repose sur le bord supérieur 18 du récipient 5 et est maintenu par les mâchoires 7. A titre de variante, un léger jeu peut être prévu entre le bord supérieur 18 du récipient 5 et le couvercle 6.

Les figures 6 et 7 montrent un autre exemple de réalisation dans lequel les conformations 30' des mâchoires 7', le rebord 10' du couvercle 6' et le bord supérieur 18' du récipient 5' diffèrent de l'exemple de réalisation précédent, les autres éléments étant identiques. A la figure 6 la mâchoire 7' est représentée en position d'attente et à la figure 7 la mâchoire 7' est représentée en position de verrouillage, le couvercle 6' étant verrouillé sur le récipient 5'.

Les conformations 30' comportent chacune une surface de contact supérieure 24', disposée au dessus de l'axe 20' de la mâchoire 7'. Chaque surface de contact supérieure 24' est prolongée du côté de l'extrémité de la face antérieure 21' par une nervure 27' présentant une face interne formant une surface de contact latérale 31' verticale prévue pour coopérer avec une zone d'appui intérieure 15' du couvercle 6', et une face externe biseautée prévue pour le passage du couvercle 6' lorsque les mâchoires 7' sont en position d'attente, tel que montré à la figure 6. Les conformations 30' comportent chacune également une paroi de fond 25'.

Le rebord 10' du couvercle 6' comporte une nervure annulaire périphérique formant une zone d'appui supérieure 12' prévue pour coopérer avec les surfaces de contact supérieures 24' des mâchoires 7'. Cette nervure est issue du bord inférieur 11' du couvercle 6' et ménage sur sa paroi latérale interne la zone d'appui intérieure 15' prévue pour coopérer avec les surfaces de contact latérales 31' des mâchoires 7'. La zone d'appui intérieure 15' présentant une légère pente afin de faciliter l'engagement de la zone d'appui supérieure 12' dans la mâchoire 7'. La paroi latérale 13' externe de ladite nervure présente une partie inférieure incurvée vers l'intérieur se raccordant avec le bord inférieur 11' du couvercle afin de coopérer avec la paroi de fond 25' de la mâchoire 7' correspondante lors de la mise en place du couvercle 6' sur le récipient 5'. La perpendiculaire à la surface de la paroi de fond 25' au point de contact avec le rebord 10' du couvercle 6' passe en dessous de l'axe 20' de la mâchoire 7' de manière à obtenir une rotation de la mâchoire 7' lors de l'introduction du couvercle 6' sur le récipient 5'. Les points de contact sur les parois de fond 25' permettent la rotation des mâchoires 7', et notamment le passage des nervures 27' lors du coulissement des parois latérales 13' du couvercle 6' sur les parois de fond 25' des mâchoires 7'.

Le bord supérieur 18' du récipient 5' présente une hauteur réduite par rapport à l'exemple précédent, pour la raison suivante. Lorsque le couvercle 6' est mis en place sur le récipient 5', les parois latérales 13' du couvercle 6' viennent en en contact sur les parois de fond 25' des mâchoires 7', ce qui provoque la rotation des mâchoires 7'. Lorsque le couvercle 6' repose sur le bord supérieur 18' du récipient 5', les mâchoires 7' occupent leur position de verrouillage, mais les zones d'appui supérieures 12' du couvercle 6' ne sont pas engagées contre les surfaces de contact supérieures 24'. Il est alors nécessaire de relâcher le couvercle 6'. Sous l'action d'un moyen de rappel, tel que par exemple le joint 9' dont l'extrémité 33' prend appui sur la collerette 34' du récipient 5', les parois latérales 13' du couvercle 6' coulissent contre les parois de fond 25' des mâchoires 7' et les zones d'appui supérieures 12' du couvercle 6' viennent en appui contre les surfaces de contact supérieures 24' des mâchoires 7', tel que représenté à la figure 7. Si les bras 4' sont soumis à un mouvement latéral vers l'extérieur, c'est à dire un mouvement latéral les écartant du récipient 5', les surfaces de contact latérales 31' des mâchoires 7' sont bloquées par les zones d'appui intérieures 15' du couvercle 6', et le couvercle 6' ne peut être déverrouillé.

De nombreuses améliorations ou modifications peuvent être apportées à cet appareil dans le cadre des revendications. De manière générale, les parois de fond les surfaces de contact inférieures, supérieures et latérales peuvent être continues ou au contraire être discontinues, c'est à dire présenter des nervures ou des plots de contact. Les bras ne sont pas nécessairement horizontaux.

Le dispositif de verrouillage peut ne comporter que les deux mâchoires rotatives diamétralement opposées. Le dispositif de verrouillage peut également comporter au moins une autre mâchoire, notamment une autre mâchoire à mouvement de translation horizontal, tel que décrit dans les demandes de brevet WO 99/17647 ou WO 99/17646.

Dans les exemples présentés le récipient est de géométrie cylindrique. Le rebord périphérique du couvercle est annulaire et forme une jupe. Toutefois les zones d'appui supérieures peuvent être tronconiques au lieu d'être horizontales.

Le récipient peut présenter un bord supérieur de géométrie non cylindrique. Dans ce cas le rebord périphérique du couvercle peut être remplacé par des portions de rebord disposées en regard des mâchoires. Les zones d'appui supérieures ne sont pas nécessairement horizontales et peuvent être inclinées et/ou incurvées, par exemple tronconiques. Les parois latérales et les zones d'appui intérieures ne sont pas nécessairement verticales et peuvent être inclinées et/ou incurvées.

L'axe de rotation des mâchoires n'est pas nécessairement horizontal. Les surfaces de contact supérieures et inférieures des mâchoires en position de verrouillage peuvent également être inclinées et/ou incurvées au lieu d'être planes et horizontales. Les surfaces de contact latérales et les parois de fond des mâchoires en position de verrouillage peuvent également être inclinées et/ou incurvées au lieu d'être planes et verticales.

Les surfaces de commande du basculement des mâchoires formées par les surfaces de contact inférieures dans le premier exemple de réalisation peuvent être remplacées par les parois de fond du deuxième exemple de réalisation, et inversement.

Les surfaces de commande du basculement des mâchoires ne sont pas nécessaires si la rotation des mâchoires de la position d'attente vers la position de verrouillage est obtenue par l'actionnement d'un dispositif de commande des mâchoires.

## Revendications

1. Appareil électroménager de préparation culinaire, comportant un boîtier (1) formant un socle (3) de réception d'un récipient (5, 5') fermé par un couvercle (6, 6'), un dispositif de verrouillage du couvercle (6, 6') sur le récipient (5, 5') comprenant au moins deux mâchoires (7, 7') de verrouillage montées chacune en rotation sur un axe (20, 20') dans le boîtier (1) de manière diamétralement opposée par rapport au bord supérieur du récipient (5, 5'), chaque mâchoire (7, 7') comportant une face antérieure (21, 21') disposée en regard du récipient (5, 5') et présentant une conformation (30, 30') prévue pour coopérer avec un rebord périphérique (10, 10') du couvercle (6, 6'), **caractérisé en ce que** les mâchoires (7, 7') sont disposées chacune dans un bras (4, 4') s'étendant à distance du socle (3), chaque conformation (30, 30') présentant une surface de contact supérieure (24, 24'), prévue pour coopérer avec une zone d'appui supérieure (12, 12') du rebord (10, 10') du couvercle (6, 6') en correspondance, ainsi qu'une surface de contact latérale (31, 31') prévue pour coopérer avec une zone d'appui intérieure (15, 15') du rebord (10, 10') du couvercle (6, 6') en correspondance.

2. Appareil électroménager de préparation culinaire selon la revendication 1, **caractérisé en ce que** l'axe (20, 20') de rotation de chaque mâchoire (7, 7') est horizontal.

3. Appareil électroménager de préparation culinaire selon l'une des revendications 1 ou 2, **caractérisé en ce que** les zones d'appui supérieures (12, 12') du couvercle (6, 6') et/ou les surfaces de contact supérieures (24, 24') des mâchoires (7, 7') en position de verrouillage sont horizontales.

4. Appareil électroménager de préparation culinaire selon l'une des revendications 1 à 3, **caractérisé en ce que** les zones d'appui intérieures (15) du couvercle (6) et/ou les surfaces de contact latérales (31, 31') des mâchoires (7, 7') en position de verrouillage sont verticales.

5. Appareil électroménager de préparation culinaire selon l'une des revendications 1 à 4, **caractérisé en ce que** les conformations (30, 30') comportent une surface de contact inférieure (23) ou une paroi de fond (25') prévue pour coopérer avec un bord inférieur (11) et/ou une paroi latérale (13') du rebord (10, 10') du couvercle (6, 6').

6. Appareil électroménager de préparation culinaire selon la revendication 5, **caractérisé en ce que** les surfaces de contact supérieures (24) et les surfaces de contact inférieures (23) sont disposées en regard l'une de l'autre.

7. Appareil électroménager de préparation culinaire selon l'une des revendications 5 ou 6, **caractérisé en ce que** les surfaces de contact supérieures (24) en position de verrouillage sont disposées au dessus du plan horizontal passant par l'axe (20) de rotation de la mâchoire (7) correspondante, et les surfaces de contact inférieures (23) en position de verrouillage sont disposées en dessous dudit plan.

8. Appareil électroménager de préparation culinaire selon l'une des revendications 5 à 7, **caractérisé en ce que** le rebord (10) comporte des parois latérales (13) prévues chacune pour coopérer avec une paroi de fond (25) reliant la surface de contact inférieure (23) et la surface de contact supérieure (24) de chaque mâchoire (7).

9. Appareil électroménager de préparation culinaire selon l'une des revendications 5 à 8, **caractérisé en ce que** les surfaces de contact latérales (31) sont formées par des ressauts ménagés sur les surfaces de contact inférieures (23).
